Europäisches Patentamt

European Patent Office

Office européen des brevets

(19)

(11) Veröffentlichungsnummer: **0 204 943**
**A1**

## EUROPÄISCHE PATENTANMELDUNG

(21) Anmeldenummer: 86105975.6

(22) Anmeldetag: 30.04.86

(51) Int. Cl.⁴: **C08J 7/12 , C08J 5/12**

(30) Priorität: 07.06.85 DE 3520302
30.01.86 DE 3602800

(43) Veröffentlichungstag der Anmeldung:
17.12.86 Patentblatt 86/51

(84) Benannte Vertragsstaaten:
AT BE CH DE FR GB IT LI NL SE

(71) Anmelder: AGRU ALOIS GRUBER & SOHN
OHG
Grünburger Strasse 41
A-4540 Bad Hall(AT)

(72) Erfinder: Menke, Klaus, Dr.
Näherweg 11
D-7520 Bruchsal(DE)
Erfinder: Wollmann, Klaus
Bahnhofstrasse 33
D-6250 Limburg-Eschhofen(DE)
Erfinder: Glink, Gerhard
Im Birkengrund 21
D-6050 Offenbach(DE)

(74) Vertreter: Rupprecht, Klaus, Dipl.-Ing.
Am Römerhof 35
D-6000 Frankfurt (Main) 90(DE)

(54) Verfahren zur Oberflächenmodifizierung von Formkörpern aus Polyvinylidenfluorid.

(57) In einem Verfahren zur Oberflächenmodifizierung von Formkörpern aus Polyvinylidenfluorid werden die Formkörper an der Oberfläche dehydrofluoriert. Die Dehydrofluorierung wird mittels einer Ätzlösung durchgeführt, die außer einer stark basischen Verbindung und einem Quellungs-und/oder Lösungsmittel für Polyvinylidenfluorid ein Hilfsmittel zur Homogenisierung der Ätzlösung enthält.

EP 0 204 943 A1

## Verfahren zur Oberflächenmodifizierung von Formkörpern aus Polyvinylidenfluorid

Die Erfindung betrifft ein Verfahren zur Oberflächenmodifizierung von Formkörpern aus Polyvinylidenfluorid sowie die Verwendung der so modifizierten Formkörper zur Herstellung haft-und -scherfester Verbundstrukturen und Laminaten mit Metallen und anderen Kunststoffen, insbesondere mit glasfaserverstärkten Polyester-und Epoxidharzmaterialien.

Polyvinylidenfluorid zeichnet sich durch hohe chemische Resistenz gegenüber anorganischen Säuren, Salzlösungen und selbst stark oxidierenden Substanzen wie Chlor-oder Bromlösungen aus. In seiner Chemikalienbeständigkeit ist es mit Polytetrafluorethylen oder anderen perfluorierten Polymeren vergleichbar. Darüber hinaus läßt es sich vorteilhaft aus der Schmelze heraus verarbeiten, zu Rohren, Tafeln, Folien, o. a. Halbzeug extrudieren und zu Formteilen spritzgießen. Diese Eigenschaften machen Polyvinylidenfluorid zum geeigneten Material für den Bau chemischer Behälter, Reaktoren und Rohrleitungen, überall dort, wo chemisch aggressive Flüssigkeiten, Säuren oder Salzlösungen transportiert und gelagert werden müssen. Da jedoch Rohre oder Behälter aus reinem Polyvinylidenfluorid häufig nicht die für den chemischen Apparate-und Anlagenbau ausreichenden Festigkeiten besitzen, ist es nötig, Verbundstrukturen z. B. von Polyvinylidenfluorid und Metallen oder Polyvinylidenfluorid und glasfaserverstärktem Kunststoffmaterial wie Polyester oder Epoxyharzen einzusetzen. Ebenso werden Lackschichten mit hohem Polyvinylidenfluorid-Dispersionsanteil oder Polyvinylidenfluorid-Kunststofflaminate zur chemikalienfesten Auskleidung von Stahlbehältern und Rohren eingesetzt.

Die Festigkeit dieser Verbundstrukturen und Laminate leidet jedoch an dem stark antiadhäsiven Verhalten und der kaum vorhandenen Bindefähigkeit des Polyvinylidenfluorids und am hohen Wärmeausdehnungskoeffizienten des Kunststoffmaterials, was bei Verbundstrukturen mit Metallen oder glasfaserverstärkten Polyester-oder Epoxyharzen zur Trennung durch die hohen in Wärme oder Kälte auftretenden Scherkräfte führt.

Um diesen Nachteilen zu begegnen, wurden Polyvinylidenfluorid-Copolymerisate z. B. mit Polymethylmethacrylat häufig als Kunstharzdispersionen für Imprägnierungen und Beschichtungen eingesetzt. Sie weisen jedoch nicht die hohe Chemikalienbeständigkeit des reinen Polyvinylidenfluorids und häufig eine geringe Abrasionsbeständigkeit auf.

Weitere bekannte Verfahren befassen sich mit der Einbettung von Glas-oder organischen Synthesefasern, wie Polyester-oder Polyamidfasern oder Vliese in das Polyvinylidenfluorid, um Verbindungspunkte für die Herstellung von Laminaten oder anderen Verbundmaterialien herzustellen. Auch dienen besonders geätzte Metalloxide oder Fasern nach dem Einpressen in die Oberfläche des Polyvinylidenfluorid zur Herstellung von Verbundwerkstoffen.

Ebenso sind haftvermittelnde Harze, wie gelöstes Polyurethan oder Polyalkylmethacrylat, bekannt die beim Auftragen mit einem, Polyvinylidenfluorid anquellendem Lösemittel in der Wärme das Verschweissen oder Verkleben des Polyvinylidenfluorids mit Metallen oder anderen Kunststoffen ermöglichen sollen.

Das Reproduzieren dieser Versuche, d. h. der Auftrag von Haftvermittlern oder Klebern auf das reine Polyvinyliden fluorid, führt zu Verbundmaterialien, die Temperatur-oder mechanischen Belastungen praktisch nicht widerstehen. Ebenso liefert das Einpressen von Polyester-oder Glasfasergewebe in das Polyvinylidenfluorid keine guten Verbundfestigkeiten und ist zudem ein aufwendiges Verfahren.

Ferner sind sehr aufwendige und nur in kleinem Maßstab anwendbare Verfahren bekannt, die sich mit der Aufpfropfung von Polymethylmethacrylat nach Bestrahlung mit $\gamma$ -Quanten, mit der Oberflächenbehandlung durch Plasmaverfahren oder mit der Oxyfluorierung mit $O_2/F_2$-Begasung befassen.

Der vorliegenden Erfindung liegt die Aufgabe zugrunde, ein Verfahren zur Oberflächenmodifizierung des Polyvinylidenfluorids anzugeben, das

a) einfach und kostengünstig in praktisch jedem beliebigen Maßstab durchführbar ist,

b) mit dem die Oberfläche des Polyvinylidenfluorids wirkungsvoll chemisch modifiziert, insbesondere hydrophiliert werden kann und

c) mit dem extrem haft-und scherfeste Verbundstrukturen des Polyvinylidenfluorids mit Metallen, mit glasfaserverstärkten Polyester-und Epoxyharzen sowie mit anderen Kunststoffen hergestellt werden können.

Diese Aufgabe ist erfindungsgemäß dadurch gelöst, daß der Formkörper an der Oberfläche dehydrofluoriert wird. Patentansprüche 2 bis 15 betreffen bevorzugte Ausführungsformen des erfindungsgemäßen Verfahrens. Der Patentanspruch 16 hat die Verwendung der modifizierten Formkörper zur Her stellung haft-und scherfester Verbundstrukturen zum Gegenstand.

Die Dehydrofluorierungsreaktion von Polyvinylidenfluorid ist bekannt. Hierzu wird Polyvinylidenfluorid-Pulver in Dimethylformamid-Lösung mit einer Base umgesetzt. Ebenso ist eine Dehydrofluorierung mit wäßriger Natron-oder Kalilauge unter Mitwirkung von Phasentransferkatalysatoren, und chemischer Angriff durch eine Lösung von Kaliumhydroxyd in Isopropanol bekannt. Die Reaktion ergibt konjugierte Polyene, die u. a. elektronisch leitfähig sein können.

Das erfindungsgemäße Verfahren beinhaltet die Verwendung einer Ätzlösung, mit der die Oberfläche des Polyvinylidenfluorids chemisch umgewandelt werden kann. Diese Umwandlung erhöht die Oberflächenenergie des Materials, nimmt die Antiadhäsivität und ermöglicht damit die Verklebbarkeit, Lackierbarkeit und Herstellung von Verbundstrukturen.

Erfindungsgemäß wird diese Wirkung durch den nachfolgenden Auftrag eines Haftvermittlers oder Klebers wirkungsvoll unterstützt. Das so behandelte Polyvinylidenfluorid kann mit Metallen sowie glasfaserverstärkten Kunststoffmaterialien zu Verbundstrukturen mit mehr als 30 N/mm² Scherfestigkeit verarbeitet werden. Ebenso werden 10 Temperaturbelastungscyclen von +120°C bis -20°C ohne kritische Beeinträchtigung der Verbundfestigkeit überstanden.

Erfindungsgemäß setzt sich die Ätzlösung zur oberflächlichen Umwandlung des Polyvinylidenfluorids zusammen aus:

a) einem oder mehreren stark basisch wirkenden Stoffe wie Alkali-, Erdalkali-und Erdmetallhydroxide, Alkali-, Erdalkali-und Erdmetallalkoholate im Konzentrationsbereich von 2 -60 Gew.-%,

b) einem oder mehreren Lösungsmittel, die Polyvinylidenfluorid anzulösen oder zumindest anzuquellen vermögen im Konzentrationsbereich von 10 -90 Gew.-%,

c) einem oder mehrere Lösungsvermittler im Konzentrationsbereich von 1 -90 Gew.-% in Gestalt von weiteren Lösemitteln, die zum Auflösen des basisch wirkenden Stoffes dienen, sowie in Gestalt von oberflächenaktiven Stoffen oder Tensiden, die zur Homogenisierung der Ätzlösung und zur Wirkungsverbesserung beitragen.

Vorzugsweise werden Natrium-und Kaliumhydroxid sowie Natrium-und Kaliumalkoholate als basisch wirkende Reagenzien eingesetzt. Bei entsprechender Löslichkeit können aber auch Erdalkalimetallhydroxide oder -alkoholate verwendet werden. Mögliche Konzentrationsbereiche sind 2 -60 Gew.-%, im Einzelfall richtet sich die optimale Konzentration an wirksamer Base nach den übrigen Komponenten des Ätzbades und der gewünschten Ätzwirkung.

Lösungsmittel, die Polyvinylidenfluorids anzuquellen, anzulösen oder in kleinen Konzentrationen auch aufzulösen, sind der zweite wesentliche Bestandteil der chemischen Ätzlösung. Von diesen an sich bekannten Lösemitteln können Dimethylformamid, Dimethylacetamid, N-Methylpyrrolidon, Dimethylsulfoxid, N,N-Propylidendimethylharnstoff, $\gamma$ -Butyrolacton oder Hexamethylphosphorsäuretriamid, Phosphorsäuretrimethyl-oder triethylester eingesetzt werden.

Bedingung ist, daß sie nicht mit der eingesetzten Base, d. h. Natrium-oder Kaliumhydroxid oder -alkoholaten reagieren und es dabei zur Zersetzung der Lösung kommt. Als besonders vorteilhaft für die Herstellung stabiler Ätzlösungen haben sich N-Methylpyrrolidon, N,N-Propylidendimethylharnstoff und Hexamethylphosphorsäuretriamid erwiesen.

Als dritten wesentlichen Bestandteil der Ätzlösung können im einfachsten Fall gesättigte, geradkettige, verzweigte oder cyclische Kohlenwasserstoffalkohole mit 1 bis 12 C-Atomen, vorzugsweise 1 bis 6 C-Atomen, eingesetzt werden. Sie dienen vor allem der vollständigen Lösung der eingesetzten Hydroxide oder Alkoholate und Homogenisierung der erhaltenen Ätzlösung. Beispiele sind Ethanol, Propanol, Butanol, Amylalkohol, Isopropanol, Isobutanol, Neopentylalkohol, Cyclohexanol u. a. Erfindungsgemäß ist es besonders vorteilhaft, polyfunktionelle Kohlenwasserstoffalkohole oder -etheralkohole wie Glykol, Diglykol und/oder Polyglykole einzusetzen und zusätzlich mit einem oberflächenaktiven Aminoalkylalkohol oder anionischen Tensiden, wie Salze von langkettigen Alkylsulfonsäuren, zur Homogenisierung und Wirkungsverbesserung der Ätzlösung zu kombinieren. Solche Hilfsmittel haben die allgemeine Formel

$$A - (CR_2)_n - X \left[ (CR_2)_n - X \right]_m (CR_2)_n - B$$

in der A und B, die gleich oder verschieden sein können, eine OR-oder NR₂-Gruppe bedeuten,

X ein Sauerstoffatom oder eine NR-Gruppe ist, die Reste R gleich oder verschieden sind und ein Wasserstoffatom oder eine Alkylgruppe mit 1 bis 6

C-Atomen bedeuten

n für eine ganze Zahl von 1 bis 6 und

m für eine ganze Zahl von 0 bis 50 steht.

Auch Ausführungen dieser Verbindungen als cyclische Verbindungen durch End-zu-End-Verknüpfung über Bildung von Kronenethern, vorzugsweise Kronenether mit insgesamt 18 Atomen und 6 Sauerstoffatomen, können verwendet werden. Ferner vermag der Zusatz von geringen Mengen von als Phasentransferkatalysatoren bekannten organischen Tetralkylammoniumsalzen durch Kationenkomplexierung der eingesetzten Alkali-und Erdalkalimetallbasen zu verstärkter Aggressivität und Ätzwirkung der Lösung beizutragen.

Erfindungsgemäß bewirken der Einsatz von kationisch komplexierenden Dialkylethylendiaminpolyglykolen als Lösungsvermittler eine deutliche Wirkungsverbesserung. Mit einem Polypropylenoxid modifiziertem Dialkylethylendiamin der allgemeinen Formel

$$R_2N-CH_2CH_2-N((CH_2-CH(CH_3)\ 0)_n-CH_2-CH\ (CH_3)-OH)_2$$

als Homogenisierungsmittel, lassen sich gute Oberflächenmodifizierungen und Ätzwirkungen bereits nach 15 Sekunden Einwirkungszeit bei 50°C erhalten.

Als weitere Hilfsmittel können auch ganz oder teilweise fluorierte Verbindungen der beschriebenen Arten eingesetzt werden, sofern sie gegenüber starken Basen stabil sind und nicht durch Nebenreaktionen zur Zersetzung der Lösung führen. Vorzugsweise lassen sich perfluorierte Glykol-oder Polyglykolderivate einsetzen.

Erfindungsgemäß lassen sich mit Ätzlösungen der beschriebenen Zusammensetzung

-Base: 2-60 Gew.-%

-Polyvinylidenfluorid anquellendes oder anlösendes Lösemittel: 10-90 Gew.-%

-Hilfsmittel, eine oder mehrere Komponenten: 1-90 Gew.-%

bei kationisch komplexierenden Lösungsvermittlern oder -zusätzen gute Ätzwirkungen bereits bei Einwirkungszeiten von 15-60 Sekunden und 50°C erreichen. Weniger starke, aber für die Herstellung von Verbundstrukturen besonders geeignete Ätzwirkungen, sind mit alkoholischen oder glykolischen Lösungsvermittlern erreichbar. In diesem Fall können Ätzzeiten von 1-20 Minuten bei Einwirkungstemperaturen von 30 -80°C eingestellt werden.

Erfindungsgemäß wird die Wirkung der Ätzlösung durch den nachfolgenden Auftrag eines haftvermittelnden Harzes wirkungsvoll unterstützt. Der Haftvermittler bewirkt

a) eine rasche Abbindung der durch die Ätzlösung geschaffenen chemischen reaktiven Zentren und verhindert eine mögliche Desaktivierung durch Umwelteinflüsse oder Handling,

b) stellt selber ausreichend polare chemische Gruppen zur Verfügung, die sich zur Anbindung an Metalle, glasfaserverstärkte Polyester-oder Epoxyharze oder andere Kunststoffe nutzen lassen und die Ätzwirkung quasi vervielfachen,

c) ermöglicht die Herstellung von Verbundstrukturen mit hoher Scherfestigkeit und guter Elastizität durch Ausgleich und Abfangen der hohen, beim Temperaturwechsel auftretenden Scherkräfte.

Erfindungsgemäß lassen sich als Haftvermittler lösliche thermoplastische oder lösliche thermisch abbindende duroplastische Kunstharze verwenden. Mit Erfolg können auch die in bekannter Weise in Klebstoffen eingesetzten flüssigen oder pastösen Mono-oder Oligomeren von Zweikomponentenharzen eingesetzt werden. Für die Herstellung stabiler Verbundstrukturen eignen sich Polyurethane, Epoxyharze oder Polyacrylate auch in entsprechenden Mischungen als Homo-oder Copolymere. Ebenso lassen sich Polybutadienacrylnitril-oder Polybutadienstyrolcopolymere, ganz oder teilverseifte Copolymere des Polyvinylacetats einsetzen. Thermisch vernetzende Nitrilkautschukpolymere, Ethylenvinylacetatcopolymere oder Polyvinylbutyralharze lassen sich vorteilhaft als lösliche Haftvermittler auftragen. Ebenso können feuchtigkeitshärtende Polyurethanbeschichtungen als Haftvermittler zur Anwendung kommen.

Mit duroplastischen Haftvermittlern, vorzugsweise Epoxyharzen, lassen sich gute Scherfestigkeiten von Verbindstrukturen mit Metallen oder glasfaserverstärkten Kunstharzen von über 30 N/mm² mit entsprechender Temperaturbeständigkeit bei +120°C und -20°C erreichen.

Zur weiteren Erhöhung von Festigkeit und Steifigkeit der Haftvermittlerschicht können bevorzugt organische Kunstfasermaterialien eingelagert werden, z. B. Polyester, Polyamid (Nylon), Polyimid -(Aramid oder Kevlar) oder Kohlefasern, -vliese oder -gewebe.

Wie beschrieben, eignet sich das Verfahren insbesondere zur Herstellung haft-und scherfester Verbundstrukturen und Laminaten von Polyvinylidenfluorid mit Metallen oder anderen Kunststoffen, insbesondere zu den zur Verstärkung aufgebrachten glasfaserverstärkten Polyester-und Epoxy harzmaterialien. Damit hat es in der chemischen Verfahrenstechnik, wo Polyvinylidenfluorid-Teile verstärkt als Behälterauskleidung, Pumpenteilen oder Rohre, die mit aggressiven chemischen Medien, Säuren oder Salzlösungen in Berührung kommen, eine große Bedeutung. Dabei entfällt die Notwendigkeit zur Herstellung von Copolymeren. Nutzen

läßt sich dieses Verfahren auch zur oberflächlichen Hydrophilierung, Beschichtung oder Lackierung von Polyvinylidenfluorid-Kunststoffteilen, z. B. von Platten, Tafeln, Folien Membranen oder Rohre.

Beispiel 1

Ein massives extrudiertes Werkstück aus Polyvinylidenfluorid wird mit einer Lösung bestehend aus 10 g Kaliumhydroxid, 50 g Isopropanol und 40 g N-Methylpyrrolidon 5 bis 10 Minuten, bei 50 bis 80°C geätzt. Nach Waschen und Trocknen wird auf die geätzte, rötlich braun gefärbte Oberfläche des Werkstücks die Lösung eines Polyurethanharzes als Haftvermittler aufgetragen und 15 Minuten auf ca. 150°C erhitzt.

Das Werkstück wird anschließend mit einem glasfaserverstärkten Polyesterharz ummantelt und zeigt eine Scherfestigkeit von 24 N/mm².

Beispiel 2

Das Verfahren des Beispiels 1 wird wiederholt, wobei jedoch als Ätzlösung eine Mischung aus 2 g Kalium-tert.-butylat 49 g Diethylenglykol und 49 g N-Methylpyrrolidon und als Haftvermittler ein lösliches Epoxyharz verwendet werden. Das anschließend mit einem glasfaserverstärkten Polyester ummantelte Werkstück zeigt eine Scherfestigkeit von 30-35 N/mm².

Beispiel 3

Das Verfahren des Beispiels 2 wird wiederholt, wobei jedoch als Haftvermittler Polyvinylbutyral verwendet wird. Das resultierende Produkt zeigt im Verbund mit einem glasfaserverstärkten Polyester eine Scherfestigkeit von 32-33 N/mm².

Beispiel 4

Zwei Platten aus Polyvinylidenfluorid werden mit einer Flüssigkeit bestehend aus 8 g Kaliumtert.-butylat, 40 g Dimethylethylendiaminpolypropylenoxid und 52 g N-Methylpyrrolidon über eine Minute bei 50°C geätzt. Nach dem Waschen und Trocknen zeigen die Werkstücke eine schwache, rötlich braune Farbe.

Auf die so oberflächlich behandelten Platten wird in einem Fall ein Zweikomponenten-Acrylat-Klebstoff und in dem anderen Fall ein einkomponentiger, bei 150°C aushärtender Epoxy-Klebstoff aufgetragen.

Auf die mit Acrylat-Klebstoff versehene Platte wird eine Stahl-Platte und auf die mit Epoxy-Klebstoff versehene Platte eine Aluminium-Platte aufgebracht. Die resultierenden Verbundmaterialien zeigen Scherfestigkeiten von 32 -35 N/mm² und 35-40 N/mm².

**Ansprüche**

1. Verfahren zur Oberflächenmodifizierung von Formkörpern aus Polyvinylidenfluorid, insbesondere zum Zwecke der Erzielung einer Verklebbarkeit und der Hydrophilierung, dadurch gekennzeichnet, daß der Formkörper an der Oberfläche dehydrofluoriert wird.

2. Verfahren nach Anspruch, dadurch gekennzeichnet, daß die Dehydrofluorierung mittels einer Ätzlösung durchgeführt wird, welche außer einer stark basischen Verbindung und einem Quellungs- und/oder Lösungsmittel für Polyvinylidenfluorid mindestens ein Hilfsmittel zur Homogenisierung der Ätzlösung enthält, wobei das Hilfsmittel zugleich als ein Lösungsvermittler für die basische Verbindung wirkt, und daß die Ätzlösung über Pinseln, Tauchen oder Sprühen auf die zu modifizierende Oberfläche aufgebracht wird.

3. Verfahren nach Anspurch 2, dadurch gekennzeichnet, daß als Hilfsmittel cycliscne, geradkettige oder verzweigte gesättigte, gegebenenfalls ganz oder teilweise fluo rierte, ein-oder mehrwertige Alkohole mit 1 bis 12, vorzugsweise 1 bis 6 C-Atomen, verwendet werden.

4. Verfahren nach Anspruch 3, dadurch gekennzeichnet, daß als Hilfsmittel Methanol, Ethanol, Isopropanol, Cyclohexanol, Ethylenglykol und/oder Glyzerin verwendet werden.

5. Verfahren nach einem der Ansprüche 2 bis 4, dadurch gekennzeichnet, daß als Hilfsmittel Verbindungen der Formel

$$A - (CR_2)_n - X \left[ (CR_2)_n - X \right]_m (CR_2)_n - B$$

verwendet werden, in der A und B, die gleich oder verschieden sein können, eine OR-oder NR₂-Gruppe bedeuten,

X ein Sauerstoffatom oder eine NR-Gruppe ist, die reste R gleich oder verschieden sind und ein Wasserstoffatom oder eine Alkylgruppe mit 1 bis 6-C-Atomen bedeuten,

n für eine ganze Zahl von 1 bis 6 und

m für eine ganze Zahl von 0 bis 50 steht,

sowie Ausführungen dieser Verbindungen als cyclische Verbindungen durch End-zu-End Verknüpfung über Bildung von Kronenethern, vorzugsweise Kronenether mit insgesamt 18 Atomen und 6 Sauerstoffatomen.

6. Verfahren nach Anspruch 5, dadurch gekennzeichnet, daß als Hilfsmittel Glykole, Polyglykole, alkylaminosubstituierte Polyglykole, Polyethylen-, Polypropylenoxide oder Polyimine, vorzugsweise Diethylenglykol oder Triethylenglykol oder Dialkylethylendiaminpolyglykole, verwendet werden.

7. Verfahren nach einem der Ansprüche 2 bis 6, dadurch gekennzeichnet, daß als Hilfsmittel als Phasentransferkatalysatoren bekannte quarternäre Ammoniumhydroxide oder Ammoniumsalze von starken organischen Säuren, vorzugsweise Tetrabutylammoniumhydroxyd, Cetyltrimethylammoniumhydrogensulfat, Benzyltriethylamminiumbromid verwendet werden.

8. Verfahren nach einem der Ansprüche 1 bis 7, dadurch gekennzeichnet , daß als stark basische Verbindung Alkali-Erdalkali-oder Erdmetallhydroxide und/oder -alkoholate verwendet werden.

9. Verfahren nach Anspruch 8, dadurch gekennzeichnet, daß als basische Verbindung Natrium-oder Kaliumhydroxid, Natrium-oder Kaliumalkoholate der allgemeinen Formel NaOR' und KOR' verwendet werden, wobei R' ein geradkettiger oder verzweigter Kohlenwasserstoffrest der allgemeinen Formel $C_n H_{2n+1}$, ein cyclischer Kohlenwasserstoffrest der allgemeinen Formel $C_n H_{2n-1}$ ist, und n eine ganze Zahl von 1 bis 12 bedeutet.

10. Verfahren nach Anspruch 8, dadurch gekennzeichnet, daß als basische Verbindung Natrium-oder Kaliumalkoholate der allgemeinen Formel NaOR² und KOR² verwendet werden, wobei R² Ether-, Hydroxy-und Aminogruppen in cyclischer, geradkettiger oder verzweigter Kohlenwasserstoffkette enthält.

11. Verfahren nach einem der Ansprüche 2 bis 10, dadurch gekennzeichnet , daß als Lösungsmittel für Polyvinylidenfluorid gesättigte Alkylamide, vorzugsweise Dimethylformamid, Dimethylacetamid, N-Methylpyrrolidon oder Hexamethylphosphorsäuretriamid, gesättigte Alkylharnstoffe, vorzugsweise 1,3 Dimethyl-3,4,5-tetrahydro-2(1H)-pyrimidinon, oder Dimethylsulfoxid, Phosphorsäuretrialkylester oder Propylencarbonat verwendet werden.

12. Verfahren nach einem der Ansprüche 1 bis 11, dadurch gekennzeichnet, daß nach durchgeführter Dehydrofluorierung die Oberfläche mit einem haftvermittelnden Kunststoff überzogen wird.

13. Verfahren nach Anspruch 12, dadurch gekennzeichnet , daß als haftvermittelnder Kunststoff lösliche, thermisch abbindende Harze mit polaren funktionellen Gruppen, wie Polyurethane, Epoxyharze, Polyacrylate, Polyacrylnitril, Polyvinylalkohol-Copolymere, ungesättigte Polyesterharze, Polybutadien/Acrylnitril-oder Polybutadien/Styrol-Copolymere verwendet werden.

14. Verfahren nach Anspruch 12, dadurch gekennzeichnet, daß als haftvermittelnder Kunststoff flüssige oder pastöse Monomere von Zweikomponentenharzen, wie Polyurethane, Epoxyharze oder Polyacrylate verwendet werden, die nach dem Mischen der Komponenten aufgetragen werden und selbständig abbinden, oder durch den Einfluß von Feuchtigkeit oder von Wärme zur Aushärtung gebracht werden.

15. Verfahren nach einem der Ansprüche 12 bis 14, dadurch gekennzeichnet, daß in den Kunststoff organische Füllstoffe, wie Polyester-, Polyamid-, Polyimidfasern-, -vliese oder -gewebe, eingelagert werden.

16. Verwendung der gemäß Ansprüche 1 bis 15 modifizierten Formkörper zur Herstellung haft-und scherfester Verbundstrukturen und Laminaten mit Metallen und anderen Kunststoffen, insbesondere mit glasfaserverstärkten Polyester-und Epoxyharzmaterialien.

# EUROPÄISCHER RECHERCHENBERICHT

**Europäisches Patentamt**

Nummer der Anmeldung

EP 86 10 5975

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | MACROMOLECULES, Band 17, 1984, Seiten 2529-2531, American Chemical Society, Easton, US; A.J. DIAS et al.: "Synthesis of a two-dimensional array of organic functional groups: Surface-selective modification of poly(vinylidene fluoride) * Seite 2529, "Introduction"; Seite 2530, Absatz 1, "Results and Discussion"; Seite 2531, letzter Absatz "In summary ...." * | 1,2,7-9 | C 08 J 7/12<br>C 08 J 5/12 |
| X | CHEMICAL ABSTRACTS, Band 76, Nr. 14, 3. April 1972, Seite 44, Zusamenfassung Nr. 73362y, Columbus, Ohio, US; & JP - A - 71 11 995 (KUREHA CHEMICAL INDUSTRY CO., LTD.) 27-03-1971 * Zusammenfassung * | 1-4,11-14,16 | |
| Y | IDEM | 1,2,8,9,12-14 | **RECHERCHIERTE SACHGEBIETE (Int. Cl.4)**<br><br>C 08 J |
| Y | US-A-3 067 078 (D.G. GLUCK)<br><br>* Ansprüche 1-3,5-8; Spalte 1, Zeilen 10-44; Spalte 2, Zeile 4 - Spalte 3, Zeile 30 * | 1,2,8,9,12-14 | |

Der vorliegende Recherchenbericht wurde für alle Patentansprüche erstellt.

| Recherchenort<br>DEN HAAG | Abschlußdatum der Recherche<br>25-08-1986 | Prüfer<br>HALLEMEESCH A.D. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | CHEMICAL ABSTRACTS, Band 104, Nr. 26, 30. Juni 1986, Seite 60, Zusammenfassung Nr. 226087m, Columbus, Ohio, US; & JP - A - 61 07 337 (MITSUBISHI PETROCHEMICAL CO., LTD.) 14-01-1986 * Zusammenfassung * | 1,12, 13 | |
| | --- | | |
| A | DE-A-2 545 726 (BASF) * Ansprüche; Seite 6, Zeilen 1-9 * | 15 | |
| | ----- | | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 25-08-1986 | HALLEMEESCH A.D. |

KATEGORIE DER GENANNTEN DOKUMENTE

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E älteres Patentdokument, das jedoch erst am oder nach dem Anmeldedatum veröffentlicht worden ist
D in der Anmeldung angeführtes Dokument
L aus andern Gründen angeführtes Dokument

& Mitglied der gleichen Patentfamilie, übereinstimmendes Dokument

EPA Form 1503 03 82